# EUROPEAN PATENT APPLICATION

(11) **EP 4 343 984 A1**
(43) Date of publication of application: **27.03.2024**
(21) Application number: 22290053.2
(22) Date of filing: 23.09.2022
(51) Int. Cl.: H01R 13/73

(54) **ELECTRICAL SOCKET FOR A TRAILER TOWBAR**

(71) Applicant: Leoni Wiring Systems France, 78180 Montigny le Bretonneux (FR)
(72) Inventor: Gaurat, Philippe, 45490 Migneres (FR); Parent, Yannik, 45340 Gaubertin (FR); Rabat, Jean-Louis, 45270 Bellegarde (FR); Tanneur, Valentin, 45270 Quiers sur bezonde (FR)
(74) Representative: FDST Patentanwälte

(57) **Abstract**

The invention refers to an electrical socket (2) for a trailer towbar, having a housing (6) for mounting on a support plate (4) of the towbar, the housing (6) extending in a longitudinal direction (8) from a front side (10) to a rear side (12) and comprises a number of guide channels (20) which extends in longitudinal direction (8) and having rivet sleeves (22) at their ends which protrudes over the rear side (12). The rivet sleeves (22) are configured to be inserted into mounting holes (24) of the support plate (4). The socket (2) further having locking pins (18) which are inserted into the guide channels (20) in an assembled state and wherein the locking pins (18) and the guide channels (20) are configured such that during assembling the locking pin (18) causes the rivet sleeve (22) to widen in radial direction such that the rivet sleeve (22) forms a locking head (26).

## Description

The invention relates to an electrical socket, especially according norme ISO 11446 and ISO 1724 for a trailer towbar.

Such electrical sockets are used for the electrical supply of a trailer which is guided by a towing vehicle by means of the trailer towbar. The socket is mechanically attached to a support plate, to which the socket is typically screwed with several screws.

Such sockets can be found, for example, in GB 2 480 811 A or
DE 20 2016 102 332 U1. For fastening, the screws are passed through the socket from a mounting side and through corresponding mounting holes in the support plate and fastened, for example, by means of nuts. This requires a certain amount of assembly work. In DE 20 2016 192 332 A1, the screws cut into a counterpart with their thread.

Based on this, an object of the invention is to enable a simplified assembly of such a socket.

According to the invention an electrical socket for a trailer towbar is provided, having a housing which is designed to be mounted on a support plate of the trailer coupling. The housing extends in a longitudinal direction from a front side to a rear side and has a plurality of guide channels which extend from the front side in the longitudinal direction and which have rivet sleeves at their end which protrude over the rear side and which are designed to be inserted through mounting holes of the support plate. Furthermore, locking pins are provided, which are each inserted into one of the guide channels in the assembled state. A respective guide channel, in particular a respective rivet sleeve, as well as a respective locking pin are designed in such a way that, during assembly and when actuated as intended, the locking pin causes the rivet sleeve to widen radially, so that the sleeve is deformed and forms a locking head. In the assembled state, this locking head forms positive lock with the rear side of the support plate so that the socket is reliably secured to the support plate.

The particular advantage of this design is that the assembly only requires actuation from one side. During assembly, the socket is simply inserted lengthwise with the rivet sleeves first into the mounting holes of the support plate and then the locking pins are also actuated from the front so that the locking head is formed. During this process, a front section of the rivet sleeve is expanded and deformed so that a positive lock is formed with the support plate.

Therefore, the conventional nuts that are usually required on the back of the support plate are not used. Furthermore, washers that are usually placed between the nut and the support plate are not used also. This simplifies the assembly.

In a preferred embodiment, the rivet sleeves each have a front end with an inner tapered channel section such that when the locking pin is displaced in the longitudinal direction, it exerts a radial force on the rivet sleeve. This causes the rivet sleeve to expand radially and forms the locking head. During assembly, a compressive force is exerted in the longitudinal direction via the locking pin, which leads to the expansion of the rivet sleeve.

Preferably the respective locking pin is a screw with a thread and the guide channel, in particular the rivet sleeve, has a counter contour which interacts with the thread. The force required to deform the rivet sleeve is transmitted to the rivet sleeve via the thread and the counter contour so that the locking head can be formed.

In order to achieve a simple and cost-effective design, the counter contour has at least two hooks, each with a hook element projecting in the radial direction, which is designed to interact with the thread. When the screw is inserted, the hook elements engage in the thread.

In a preferred embodiment, the hooks, at least the hook elements, are held elastically in the radial direction in such a way that the locking pin and especially the screw can be inserted into the rivet sleeve without a rotational movement. Due to the elastic mounting, the hook elements therefore yield in the radial direction when the screw is inserted. This design further simplifies the assembly.

In a preferred embodiment, the screw has a screw head followed by a first smooth shank portion followed by a second shank portion having the thread. This makes it possible to have a more rigid screw and to limit the tightening.

In a preferred embodiment, each hook has a longitudinally extending arm which is preferably cut out of a wall of the guide channel. The arm is only connected to the wall with its rear end. At the front end, the arm has the hook element. In this way, the desired radial elasticity is obtained in a simple design.

Preferably, a maximum of three and in particular a maximum of two hooks are formed distributed around the circumference of the rivet sleeve. These are in particular evenly distributed around the circumference.

The individual hook elements are preferably arranged offset to each other in longitudinal direction according to a thread pitch of the thread of the screw.

In a preferred embodiment, a respective hook has a radially outer support surface which, in the mounted state, lies within a respective mounting hole. In the assembled state, a wall of the mounting hole therefore forms an abutment for a respective hook and prevents it from deviating radially outwards. This radial support surface therefore typically adjoins the rear side of the housing directly in the longitudinal direction.

The radial support surface is preferably formed in the area of the hook elements. This is understood to mean that the hook elements are formed at a longitudinal position where the support surface is formed. This means that the hook elements are also arranged at least in the area of the mounting hole in the assembled state. This is understood to mean that the hook elements protrude, for example, by a maximum of the thickness of the support plate in the longitudinal direction beyond the rear side of the carrier plate. Preferably, however, the hook elements are located within the respective mounting hole in the mounted state, i.e. when the rear side of the socket is in contact with the mounting plate and before the screw is tightened.

Preferably the guide channels - and in particular the hooks - have a shoulder, especially on their radial outer side, which defines an axial stop surface with which the guide channels and thus also the rivet sleeve abuts the fastening plate in the assembled state.

In a preferred embodiment, the radial support surface adjoins this axial stop surface.

Overall, a respective hook is therefore preferably designed in such a way that the hook, or the guide channel in the area of the hook, forms the shoulder at one end, which forms the axial stop surface and the radial support surface.

The rivet sleeves are preferably an integral part of the housing, which means that they are a one-piece and monolithic component of the housing. They are generally made of a plastic, just like the rest of the housing. The housing with the guide channels and the rivet sleeves is, for example, an injection-moulded component.

In the assembled state, the socket is fixed to the support plate, whereby for this purpose the support plate is held positively between the rear of the housing and the formed locking head.

An embodiment of the invention is explained in more detail below with reference to the figures. These show:
- FIG 1: a perspective front view of a socket for mounting on a support plate in an exploded view,
- FIG 2: a perspective rear view of the support plate with the socket fixed to it with an outgoing cable guide,
- FIG 3: a side view of the arrangement according to FIG 1 to explain the assembly,
- FIG 4: a side view of the socket in a state in which it is fixed to the support plate, and
- FIG 5: a sectional cross-sectional view in the area of a mounting hole of the support plate, through which a rivet sleeve with an inserted screw is Inserted.

The figures show a socket 2 for a trailer towbar, which is designed for attachment to a support plate 4 of the trailer towbar, which is not shown further. In the final assembled state, the socket 2 is firmly mounted on the support plate 4. The support plate 4 is typically attached as a free support plate 4 to a carrier of the trailer towbar, for example by welding. Alternatively, the support plate 4 may be part of some other component. The Socket 2 is generally used for the electrical connection of a trailer to a towing vehicle. Several electrical plug contacts are typically arranged inside the socket 2 for this purpose.

In an assembled state the socket is attached to such a trailer towbar of a vehicle.

The socket 2 generally has a housing 6 made of an insulating material and extends in a longitudinal direction 8 from a front side 10 to a rear side 12. As shown in the example according to the figures, the socket 2 often has a hinged cover 14 which protects the electrical plug contacts located inside.

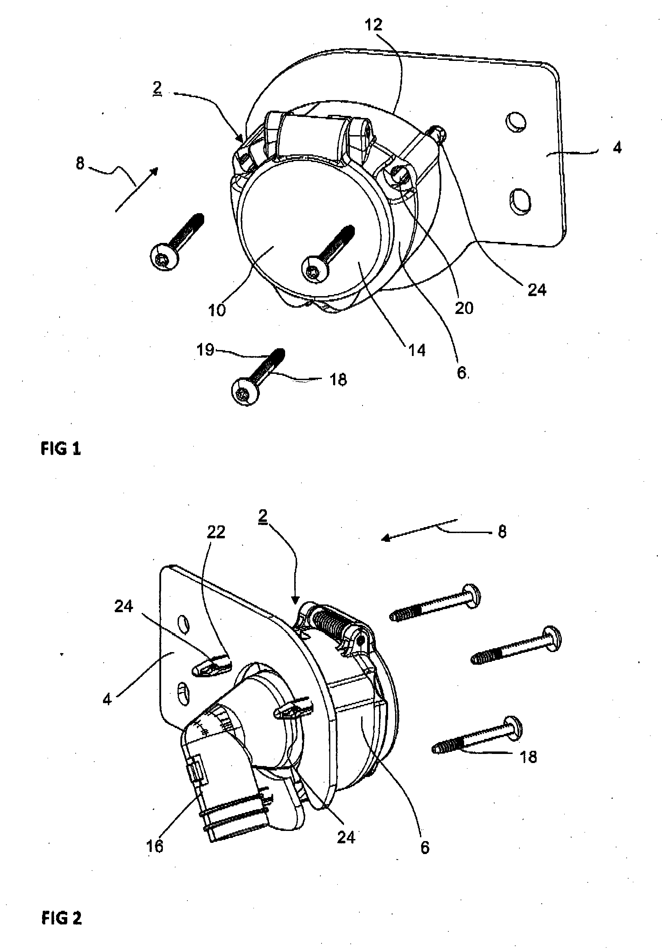

Typically, electrical connection cables exit from the rear side 12 via a cable guide 16 shown in Figure 2.

The socket 2 is fastened to the support plate 4 with the aid of several locking pins, which in the illustrated embodiment are designed as screws 18. Preferably, three locking pins are provided, which are equally distributed around the circumference of the housing 6.

In the embodiment shown the screws 18 do have a screw head followed by a first . (larger) smooth shank portion, followed by a second (shorter) shank portion with a thread 19. In an alternative the thread may extend over the entire shank.

The screws 18 are preferably made of plastic and, in particular, are specially manufactured for use in the socket 2. The screws are therefore preferably not standard screws.

The housing 6 forms a guide channel 20 for each screw 18, each of which is guided through the housing 6 from the front side 10. It is of particular importance that the guide channels 20 extend beyond the rear side 12 and form a rivet sleeve 22 there.

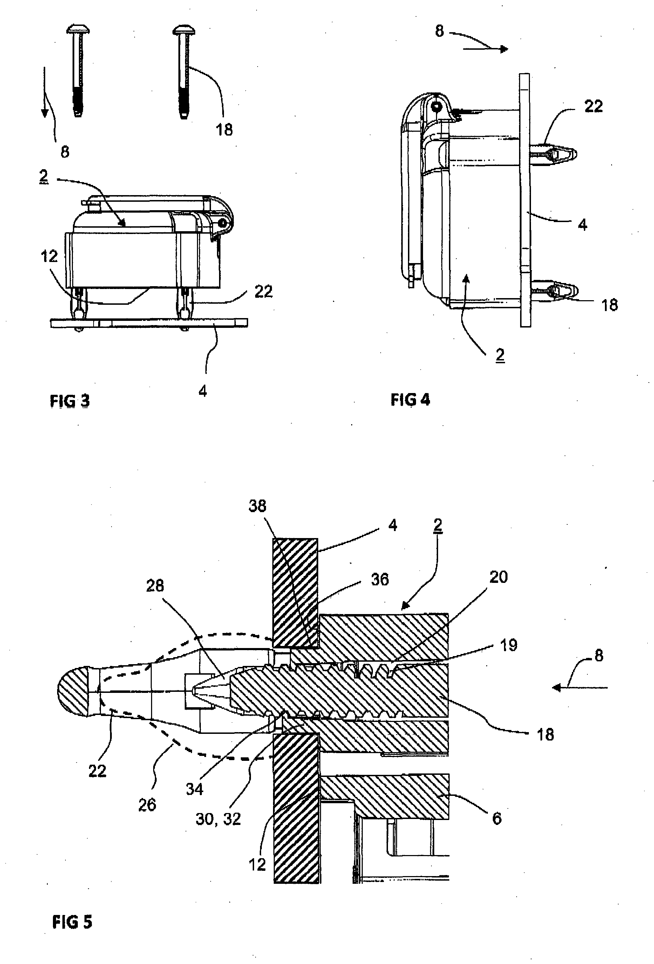

Corresponding to the rivet sleeves 22, the support plate 4 has mounting holes 24 through which the rivet sleeves 22 are inserted during assembly of the socket 2. In an intermediate assembly position, as shown for example in Figure 2 or also in Figure 4, the socket 2 rests against the support plate 4 with a rear wall formed at the rear side 10. The rivet sleeves 22 are inserted through the mounting holes 24 and protrude over a rear side of the support plate 4. In this intermediate assembly position, the socket 2 is only fixed to the support plate 4 without being firmly connected to it.

If required, for example, a latch is already provided in this intermediate assembly position. For this purpose, radially protruding latching lugs are formed on the outside of the rivet sleeves 22, for example, which engage behind a hole edge of the respective mounting hole 24.

For reliable and secure fastening, the locking pins (screws 18) are inserted and actuated. The locking pins and the rivet sleeves 22 generally interact in such a way that, when the locking pins are actuated as intended (for example turning in case of a screw or pulling in case of a bolt), a force is exerted on the rivet sleeve 22 which causes the rivet sleeve 22 to expand radially so that it is deformed in a front end and forms a locking head 26, as illustrated in highly simplified form in FIG 5 with a dotted line.

There are different possibilities for the radial expansion to form the locking head 26.

A preferred possibility is explained in more detail in connection with FIG 5:
In general, the rivet sleeve 22 is preferably, but hot necessarily, designed as a slotted rivet sleeve, i.e. having a wall with slots made therein, via which the radial expansion is made easier.

In the embodiment, the rivet sleeve 22 is closed at its front end, i.e. the slots extend only over a partial length of the rivet sleeve 22.

The rivet sleeve 22 has an inner channel section 28 tapering in the longitudinal direction 8. When the.screw 18 is screwed in, the screw 18 presses the wall of the rivet sleeve 22 radially outwards so that it widens and forms the locking head 26.

The guide channel 20 generally has a counter contour that interacts with the thread 19 of the screw 18, so that the screw 18 is displaced In the longitudinal direction 8 when it is screwed in. The counter contour generally forms a kind of internal thread.

With regard to a design as simple as possible, several and in particular exactly two hooks 30 are formed in the preferred embodiment according to FIG 5. They have an arm 32 extending in the longitudinal direction 8, at the front end of which a radially inwardly projecting hook element 34 is formed, which engages in the thread 19 of the screw 18. The different hook elements 34 are arranged offset to each other in longitudinal direction 8 according to the thread pitch.

Preferably, the hooks are cut out of a wall of the guide channel 20 and are connected to this wall, for example, only at a foot area opposite the hook elements 34.

The hooks 30 are preferably generally elastic so that they can yield in the radial direction. This makes it possible for the screws 18 to be inserted into the guide channel 20 in the longitudinal direction 8 without any rotational movement and then to be held in the guide channel 20 in such a way that they cannot be lost, for example. With the screws 18 inserted, a pre-assembled assembly is formed, consisting of the socket 2 and the screws 18, for example for transport purposes.

As can also be seen from Fig 5, the guide channel 20, in particular the hook 30, forms a shoulder in the area of the rear side 12. This forms an axial stop surface 36 and an adjoining radial support surface 38. The axial stop surface 36 extends preferably in the same plane as the wall of the rear side 12.

The radial support surface 38 is effectively an outer wall of the respective hook 30. In the assembled position, as shown in Figure 5, the hooks 30 are each embedded within the mounting hole 24. This means that the wall of the mounting hole 24 forms an abutment so that the hook 30 cannot move radially outwards.

At the same time, the stop surface 36 defines a stop with which the guide channel 20 and thus the housing 6 reaches a defined longitudinal position for contact with the support plate 4.

The socket 2 is preferably mounted as follows:
In a first step, the socket 2 is suitably positioned in front of the support plate 4 and the rivet sleeves 22 are inserted through the mounting holes 24.

In an optional embodiment the socket 2 is only inserted to a pre-assembly position and Is fixed to the support plate 4, for example, by means of an intermediate latch, so that the rear side 12 is still spaced a little way from the support plate 4. This situation is shown, for example, in Figure 1. For this purpose, the rivet sleeve 22 has a latching element on its outer side, for example. Alternatively, the individual rivet sleeves 22 are only held by a clamping force. This is achieved by the slotted design of the rivet sleeve 22.

In a subsequent step, the locking pins (screws 18) are inserted into the guide channels 20 from the front and - if necessary, after the socket 2 has been brought from the pre-assembly position until it is in contact with the support plate 4. Alternatively, the locking pins are already held in the guide channels 20 when the rivet sleeves 22 are put through the mounting holes 24.

Afterwards the locking head 26 is formed by actuating the respective locking pin. In the shown embodiment, the screws 18 are screwed

The particular advantage of the method described here is that during assembly, access and assembly is only required from the front side. Therefore, no fastening elements such as washers; nuts, etc. need to be attached and held on the rear side of support plate 4.

As an alternative to the variant described in FIG 5, it is also possible that an inner thread or at least an inner thread element is formed as a counter contour in the front area of the rivet sleeve 22, so that the screw 18 exerts a tensile force on the rivet sleeve 22 in the opposite direction to the longitudinal direction 8, thereby causing the expansion by pulling back the front part of the rivet sleeve 22 towards the support plate 4.

Finally, it is also possible that - in particular in the manner of a blind rivet - instead of a screw, for example, a simple bolt is inserted into the rivet sleeve 22 and in particular is also pushed through. The bolt has, for example, a bolt head at one end, which engages behind the rivet sleeve at its front end. To form the locking head 26, a tensile force is exerted on the bolt so that the rivet sleeve 22 is pulled and deformed against the longitudinal direction 8.

In all variants, simple assembly from the front side 10 is achieved with at the same time reliable and secure fastening through the formation of the locking head 26.

### List of reference signs

- 2: Socket
- 4: Support plate
- 6: Housing
- 8: Longitudinal direction
- 10: Front side
- 12: Rear side
- 14: Cover
- 16: Cable guide
- 18: Screw
- 19: Thread
- 20: Guide channel
- 22: Rivet sleeve
- 24: Mounting hole
- 26: Locking head
- 28: channel section
- 30: Hook
- 32: Arm
- 34: Hook element
- 36: Axial stop face
- 38: Radial support surface

## Claims

1. Electrical socket (2) for a trailer towbar, having a housing (6) for mounting on a support plate (4) of the towbar, the housing (6) extending in a longitudinal direction (8) from a front side (10) to a rear side (12) and comprises a number of guide channels (20) which extends in longitudinal direction (8) and having rivet sleeves (22) at their ends which protrudes over the rear side (12), the rivet sleeves (22) are configured to be inserted into mounting holes (24) of the support plate (4), the socket (2) further having locking pins (18) which are inserted into the guide channels (20) in an assembled state and wherein the locking pins (18) and the guide channels (20) are configured such that during assembling the locking pin (18) causes the rivet sleeve (22) to widen in radial direction such that the rivet sleeve (22) forms a locking head (26).

2. Electrical socket (2) according to claim 1, wherein the rivet sleeve (22) has a front end with a tapered channel section (28), such that the locking pin (18) exerts a radial force on the sleeve (22) when the locking pin (18) is displaced in longitudinal direction (8) during assembling and thereby widening the rivet sleeve (22) to create the locking head (26).

3. Electrical socket (2) according to the preceding claim, wherein the locking pins (18) are screws with a thread (19) and each guide channel (20) has a counter contour that interacts with the thread (19).

4. Electrical socket (2) according to the preceding claim, wherein the counter contour comprises at least two hooks (30) each having a hook element (34) projecting in a radial direction and configured to engage the thread (19).

5. Electrical socket (2) according to the preceding claim, wherein the hooks (30) are held elastically in the radial direction in such a way that the locking pin (18) can be inserted into the rivet sleeve (22) without rotary movement.

6. Electrical socket (2) according to the claim 4 or 5, wherein each hook (30) has an arm (32) which extends in longitudinal direction (8) and having the hook element (34) at its front, wherein the hook (30) is especially cut out from a wall of the guide channel (20).

7. Electrical socket (2) according to one of the claims 4 to 6, wherein the hooks (30) have a radially outer support surface (38) which - in the assembled state - is located inside the respective mounting hole (24).

8. Electrical socket (2) according to the preceding claim, wherein the support surface (38) is arranged in the area of the hook elements (34).

9. Electrical socket (2) according to one of the preceding claims, wherein the guiding channels (20) have a shoulder defining an axial stop surface (36), which abuts the support plate (4) in the assembled state, wherein the stop surface (36) is preferably adjacent to radial support surface (38).

10. Electrical socket (2) according to one of the preceding claims, wherein the rivet sleeves (22) are an integral part of the housing (6).
